# EUROPEAN PATENT APPLICATION

(11) **EP 4 835 622 A1**
(43) Date of publication of application: **04.11.2026**
(21) Application number: 25300056.6
(22) Date of filing: 30.04.2025
(51) Int. Cl.: G06F 3/01, G09B 9/00

(54) **HAPTIC SYSTEM AND VIRTUAL REALITY SYSTEM FOR VIRTUAL REALITY SURGEON TRAINING**

(71) Applicant: ORamaVR Single Member S.A. trading as ORamaVR S.A., 70013 Heraklion (GR)
(72) Inventor: Papadakis, Emmanouil, 71305 Heraklion (GR); Lydatakis, Nikolaos, 71306 Heraklion (GR); Trachanias, Panagiotis, 71305 Heraklion (GR); Papagiannakis, Georgios, 54631 Thessaloniki (GR)
(74) Representative: Lyberis, Nikolaos

(57) **Abstract**

A haptic device for virtual reality training of surgeons is presented. The device has the form of a jacket made up of a vest with sleeves and gloves made of elastic fabric, having a set of position sensors, and a set of electromagnetic clutches for restricting the surgeon's movements in such a way that his brain mistakes the resistance for an applied force, while minimizing energy consumption, increasing accuracy and realism of the feedback, and minimizing weight and volume. The device is suitable for use with virtual reality systems for implementing training scenarios for surgeons.

## Description

### TECHNICAL FIELD

The present disclosure relates to haptic systems and VR systems for use in training surgeons using Virtual Reality (VR).

### BACKGROUND

For many centuries, the medical profession has used anatomy classes as a pilar in the training of young doctors. Such training involves the carefully planned dissecting of cadavers to allow doctors to learn the numerous organs of the human body. The aim is not only to learn to identify them but also to learn and to experience first-hand the texture and the hardness of these organs.

Similarly, medical surgeons (surgeons for short) are trained and retrained using cadavers to learn how to operate the human body, e.g. for repairing organs, removing them and replacing them with donor or artificial organs.

In recent years, anatomy and surgical training have made use of digital technologies in an effort to replace the use of cadavers. The driving force for this digital revolution in medical training is cost, scarcity of cadavers and ethical dilemmas. Older digital systems were rather crude in the replication of the real anatomy and surgical experience and relied on available technology that was often used in immersive VR games.

More recent advances in VR headsets, sensors and haptic devices have enabled surgeons to follow immersive, highly accurate and realistic training scenarios. Such advanced systems are typically built in the form of haptic gloves which integrate positioning sensors providing data that are used to model the determine the position of the surgeon's hand and its fingers, and haptic elements that provide force feedback which is modeled to replicate the feeling of weight (e.g. of a scalpel) and the hardness of an organ (e.g. when a surgeon cuts the skin with the scalpel).

The most common design choice of such systems is the use of an exoskeleton-type structure attached or embedded in the haptic glove. The exoskeleton-type structure is attached to the glove in such a way as to offer a rather stable fit. It consists of articulated members, which are connected to Electrical Motors (EM). Every time the surgeon wearing the gloves moves his fingers, e.g. for holding a virtual scalpel, his fingers exert forces to the gloves and thus to the exoskeleton members. At the same time, the EMs are instructed by a controller (e.g. a microcontroller) to move in a direction opposite to the direction of the applied forces by the surgeon's fingers.

As a result, the counteracting forces exerted by the EMs create a sensation of weight and torque that mimics the touch feeling experienced by the same surgeon when he holds a real scalpel. Similar sensations can be created to mimic the handling and operation on human tissue, thus creating realistic operating conditions as part of a surgeon training scenario implemented in a VR world containing a virtual (i.e. graphical replica) of the human body and its organs.

Regardless of the accuracy and realism achieved by these haptic gloves and VR systems, their use is far from perfect and in fact various limitations persist even in the latest models.

The use of EMs in the haptic gloves does create a force feedback that can up to a certain degree mimic the feedback when operating on real human organs but at the same time EMs are very hungry in power due to their mechanical nature. This high power-energy dissipation necessitates the use of mains power which is provided to the EMs via long power cables. However, these cables add to the weight of the gloves, thus making them less comfortable to use. It may not sound like a serious problem since the additional weight of power cables may not be considered excessive. However, this weight adds upon the weight of the EMs themselves. Indeed, the weight of EMs is significant with respect to the weight of the other components of the glove.

The reader easily understands that in order to accurately replicate the anatomy of the surgeon's hand, the exoskeleton has to match the bone joints and their degrees of freedom, meaning that the number of EMs have to at least match the number of bone joints.

This adds-up to a significant weight for the haptic glove which also integrates sensors for determining the position of the hand and the fingers. Such weight can be easily lifted by the surgeon's hand. However, if the reader considers that a surgeon's training scenario can last from several minutes to well over an hour (or even several hours) it becomes apparent that the use of the haptic glove is cumbersome, very tiring and not appealing for use by surgeons.

In an effort to reduce weight, haptic glove designers have adopted the use of batteries for shedding off weight by using shorter power cables. However, the high-power dissipation by EMs results in short battery life before a new battery has to be used (thus interrupting the training scenario) or the existing battery has to be recharged (resulting in long interruptions in the training scenario).

Further improvements in haptic gloves design include the use of fewer EMs so as both to shed weight and to reduce energy and power consumption, thus enabling the available battery power to last longer and support longer training scenarios than before. However, the use of fewer EMs in the glove means that the force feedback exerted by these EMs does not accurately recreate haptic feedback needed for the selected training scenario. Instead, it only gives an approximation which gets less realistic as more EMs are removed. Thus, the overall feeling sensed by the surgeon is not as accurate as needed for receiving top-class training through a VR-haptic training scenario.

In a more "extreme" version of this design, the glove is stripped of all the EMs and simply contains position sensors. This may solve the problems relating to weight and power, but such a glove is merely a data glove that can capture the position of the hand and its fingers and not a haptic glove anymore. As a result, it cannot give force feedback to the surgeon and thus is not suitable for use in realistic VR-haptic training systems for surgeons.

At the same time, the feeling experienced when handling a surgical tool and when operating on a human organ does not depend only on the force feedback on the fingers and the hand. It also depends on the feedback experienced on the entire arm and shoulder. So, in order to mimic this feeling, the use of two haptic gloves, worn at the two hands of the surgeon are not enough to provide a realistic feeling. For this reason, sleeves and a vest are needed in addition to the gloves. Although this seems like an obvious choice, it is not as it would mean the use of more EMs and exoskeleton parts, which would further add weight and significantly increase power dissipation and energy consumption, further aggravating the problems mentioned above. For these reasons, the use of a vest and sleeves together with the gloves (i.e. a jacket with gloves) is not possible for supporting surgeon training scenarios, especially complex and long scenarios.

There is, therefore, a need for a more accurate haptic system that can support complex and long surgical VR training scenarios, while providing high realism, easy and comfortable use.

### SUMMARY

The current exemplary implementations deal with the task of creating and controlling a haptic device for virtual reality training of surgeons. The device has the form of a jacket made up of a vest with sleeves and gloves made of elastic fabric, having a set of position sensors, and a set of electromagnetic clutches for restricting the surgeon's movements in such a way that his brain mistakes the resistance for an applied force, while minimizing energy consumption, increasing accuracy and realism of the feedback, and minimizing weight and volume. The device is suitable for use with virtual reality systems for implementing training scenarios for surgeons. Alternatively, it can be used for any type of VR training or gaming scenario.

### BRIEF DESCRIPTION OF THE DRAWINGS

**FIG.1** shows a simplified partial back view of an exemplary embodiment of the present haptic system worn by the surgeon.
FIG.2 shows a high-level diagram of the logic of the exemplary embodiment of Fig.1 used in a VR surgeon training system.

### DETAILED DESCRIPTION

The word "exemplary" is used herein to mean "serving as an example, instance, or illustration". Any example described herein as "exemplary" is not necessarily to be construed as preferred or advantageous over other embodiments.

The acronym "ASIC" is intended to mean "Application Specific Integrated Circuit".

The acronym "CPU" is intended to mean "Central Processing Unit".

The acronym "OS" is intended to mean "Operating System".

As used herein and in the appended claims, the singular forms "a," "and," and "the" include plural referents unless the context clearly dictates otherwise.

Unless defined otherwise, all technical and scientific terms used herein have the same meaning as commonly understood by one of ordinary skill in the art to which this invention belongs. Although any techniques similar or equivalent to those described herein can be used in the practice or testing of the invention, the preferred techniques are described.

The terms "user" and "surgeon" are used interchangeably to refer to any person wearing a haptic jacket, vest, sleeve or glove according to the present innovative solution.

### Haptic System

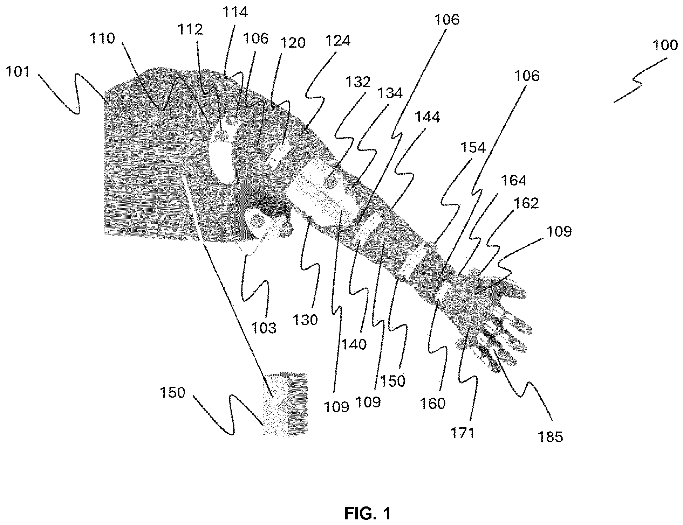

**FIG.1** shows a simplified partial back view of an exemplary embodiment of the present haptic system worn by the surgeon.

A surgeon (101) is shown wearing the haptic system (100) of the present innovative solution. For simplicity only part of the surgeon's torso is illustrated together with one erm and hand. Surgeon (101) wears a vest, sleeve and glove made of an elastic material. Any kind of known elastic fabric (woven or non-woven) can be used as long as it is suitably shaped and dimensioned to enclose the torso, arm and hand of an adult.

Optionally, it is possible to equip the vest, sleeve and glove with additional features, e.g. straps or similar features for more securely attaching the haptic system's (100) elastic fabric to the size and shape of the surgeon's torso, arm and hand. In this way potential movement of the fabric over the surgeon's skin is limited, thus reducing and potential misalignment of systems elements. Additionally, special fitting pads (185) may be used in the fingers of the gloves to more tightly and non-movably fit them to the surgeon's fingers.

Various elements of haptic system (100) are securely attached to the elastic fabric either by fixing features (e.g. hook-and-loop pairs, stitching, elastic adhesive tape) or interwoven in the fabric. The elastic fabric has attached to it a number of patches (110, 110a, 120, 130, 140, 150, 160) made of any material with substantially no elasticity. For example, patches (110, 120, 130, 140, 150, 160) may be made of plastic, stiff woven fabric, metal, wood, nanomaterials, etc.

Patches (110, 110a, 120, 130, 140, 150, 160) preferably have an anchor pad (114, 114a, 124, 134, 144, 154, 164) securely attached to them. The anchor pad (114, 114a, 124, 134, 144, 154, 164) is made of a soft material (e.g. a fabric, or a foamy, or a jelly-type material that can be compacted by at least 20% by applying a mechanical force to it and expand substantially to its original dimensions upon removal of the mechanical force), Its purpose it to come into contact with the surgeon's skin for ensuring comfortable use of haptic system (100) when worn.

Patches (110, 110a, 120, 130, 140, 150, 160) also have an ElectroMagnetic Clutch (EMC) (112, 112a, 132, 162) securely attached to them. EMCs (112, 112a, 132, 162) are used instead of EMs for reducing energy consumption, since EMCs generally consume at least 5 times less energy than EMs, while typically having smaller dimensions and less than half the weight of EMs.

EMCs operate electrically but transmit torque mechanically. Since no mechanical linkages are required to control their engagement, they provide fast, smooth operation and less energy consumption.

When the clutch is actuated, current flows through an electromagnet producing a magnetic field. A rotor portion of the clutch becomes magnetized and sets up a magnetic loop that attracts an armature. The armature is pulled against the rotor and a frictional force is generated at contact. Within a relatively short time, the load is accelerated to match the speed of the rotor, thereby engaging the armature and an output hub of the clutch.

The present haptic device, i.e. a jacket comprising of the vest, sleeves and gloves, does not rely on actively applying force to the users body (so there is no need for EMs that consume a lot of energy), but rather on restricting the surgeon's movements (using low power consuming EMCs) in such a way that his brain mistakes the resistance for an applied force.

For this EMC-based system to function, EMCs are connected via cables (106), i.e. metal or synthetic wires. Parts of these cables are selectively and optionally routed through cable tubing (103, 109) to prevent rubbing against the fabric and thus prevent frictional wear and damage. For instance, such cable tubing (103, 109) is installed at the shoulder, the inside of the elbow and the inside of the wrist.

Haptic system (100) also has position sensors (not shown) for determining the relative position of the joints of the surgeon, electrical wires (not shown) for supplying power to the sensors and the EMCs, a battery (not shown) connected to the electrical wires for providing the power, and a microcontroller (190) connected to the sensors, the EMCs and the battery. The position sensors may be implemented by any suitable technology, preferably by inertia sensors. The microcontroller is designed to receive sensor signals and reaction forces readings and use inverse kinetics algorithms for calculating body (i.e. shoulder, arm, hand, and finger) pose and then use forward dynamics algorithms for controlling the voltage applied to the EMCs for controlling the operation of the EMCs, thus restricting the surgeon's movements (consuming low power) in such a way that his brain mistakes the resistance for an applied force.

Such a design of system (100) ensures that one EMC is used at each joint of the surgeon's shoulder, arm, hand, and fingers thus creating a realistic haptic operation that improves the training experience of the surgeon.

The haptic system can also be used for any training or gaming scenario.

### Alternative Exemplary Implementation

In an alternative exemplary implementation, additional patches, EMCs, cables, anchor pads, and cable tubing are used on the frontal side of the shoulders, arms, hands and fingers. This increases the accuracy of the system and caters for all degrees or freedom of all joints thus further increasing accuracy and realism of the training experienced by the surgeon.

Optionally the EMCs in the main and the alternative exemplary implementations may be replaced by ElectroAdhesive Clutches (EAC) for further decreases in weight, volume, and power consumption, and simplifying the electronics needed for operating them.

An EAC works by electrostatic adhesion. A layer of insulating material separates two sheets of metal, allowing a strong electric field to develop when voltage is applied. The electrons on one side are attracted to the protons on the other, causing the sheets to stick together and prevent sliding due to a friction force generated at contact. The charge can develop quickly, and power consumption is low because the electrons don't flow across the insulating material. When the voltage is removed, the electrons equalize and the coated metal sheets just slide against each other. This leads to a lightweight, low-power clutch that can engage and disengage quickly, setting the stage for devices with many clutches acting together.

### Logic of the Haptic System

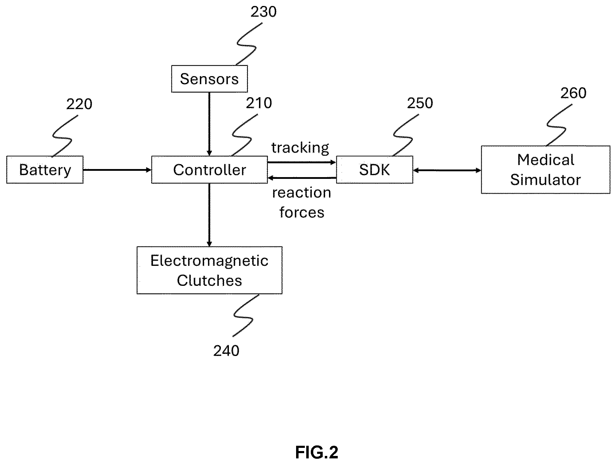

**FIG.2** shows a high-level diagram of the logic of the exemplary embodiment of Fig.1 used in a VR surgeon training system.

System (200) has controller (210), which receives sensory data from sensors (230), and power from battery (220), which also supplies power to EMCs (240). Controller (210) sends tracking data to Software Development Kit (SDK) (250), which in turn sends data to medical simulation module (260). SDK (250) returns reaction forces data to controller (210), which uses them to apply adapted voltages to EMCs (240) for controlling the operation of the EMCs, thus restricting the surgeon's movements in such a way that his brain mistakes the resistance for an applied force, while minimizing energy consumption.

### Haptic VR Training System for Surgeons

The above-described exemplary implementations of the haptic jacket, vest, sleeves and gloves are used with a VR simulator and control system to form a haptic-VR system. The controller of the haptic system communicates with the controller, or simulator, or SDK of the VR system for sending sensory tracking data and receiving reaction forces data for adapting voltages applied to EMCs for controlling them with the aim of restricting the surgeon's movements in such a way that his brain mistakes the resistance for an applied force, while minimizing energy consumption.

The above exemplary embodiment descriptions are simplified and do not include hardware and software elements that are used in the embodiments, but are not part of the current innovative solution, are not needed for the understanding of the embodiments, and are obvious to any user of ordinary skill in related art. Furthermore, variations of the described technique, system architecture, and software architecture are possible, where, for instance, technique steps, and hardware and software elements may be rearranged, omitted, or newly added.

Various embodiments of the invention are described above in the Detailed Description. While these descriptions directly cover the above embodiments, it is understood that those skilled in the art may conceive modifications and/or variations (such as addition, deletion, or reordering of process steps, and software and hardware modules, variation of the number of and the size of EMCs, etc.) to the specific embodiments shown and described herein. Any such modifications or variations that fall within the purview of this description are intended to be included therein as well. Unless specifically noted, it is the intention of the inventor that the words and phrases in the specification and claims be given the ordinary and accustomed meanings to those of ordinary skill in the applicable art(s).

The foregoing description of a preferred embodiment and best mode of the invention known to the applicant at this time of filing the application has been presented and is intended for the purposes of illustration and description. It is not intended to be exhaustive or limit the invention to the precise form disclosed and many modifications and variations are possible in the light of the above teachings. The embodiment was chosen and described in order to best explain the principles of the invention and its practical application and to enable others skilled in the art to best utilize the invention in various embodiments and with various modifications as are suited to the particular use contemplated. Therefore, it is intended that the invention not be limited to the particular embodiments disclosed for carrying out this invention, but that the invention will include all embodiments falling within the scope of the appended claims.

Those of skill in the art would understand that signals may be represented using any of a variety of different techniques. For example, data, software, instructions, signals that may be referenced throughout the above description may be represented by voltages, currents, electromagnetic waves, magnetic fields or particles, light or any combination thereof.

Those of skill would further appreciate that the various illustrative radio frequency or analog circuit blocks described in connection with the disclosure herein may be implemented in a variety of different circuit topologies, on one or more integrated circuits, separate from or in combination with logic circuits and systems while performing the same functions described in the present disclosure.

Those of skill would also further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g. a combination of a DSP and a microprocessor, a plurality of microprocessors, one or more microprocessors in conjunction with a DSP core, or any other such configuration.

In one or more exemplary embodiments, the functions described may be implemented in hardware, software, firmware, or any combination thereof. If implemented in software, the functions may be stored on or transmitted over as one or more instructions or code on a computer readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer or any other device or apparatus operating as a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

An exemplary storage medium is coupled to the processor such that the processor may read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed exemplary embodiments is provided to enable any person skilled in the art to make or use the present invention. Various modifications to these exemplary embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

## Claims

1. A haptic system (100) for Virtual Reality (VR) surgeon training, the system comprising:
a jacket comprising a vest, two sleeves and two gloves made of an elastic material;
a plurality of patches (110, 110a, 120, 130, 140, 150, 160) made of a material with substantially no elasticity, having (a) an anchor pad (114, 114a, 124, 134, 144, 154, 164) securely attached to the patches (110, 110a, 120, 130, 140, 150, 160) and made of a material configured for being compacted by at least 20% when applying a mechanical force to it and expand substantially to its original dimensions upon removal of the mechanical force, and (b) an ElectroMagnetic Clutch (EMC) (112, 112a, 132, 162) securely attached to the patches (110, 110a, 120, 130, 140, 150, 160)
a plurality of cables (106) connected to the plurality of EMCs (112, 112a, 132, 162);
a plurality of position sensors;
a battery;
a microcontroller (190) configured for receiving sensor signals and reaction forces readings and using inverse kinetics algorithms for calculating shoulder, arm, hand, and finger pose and then using forward dynamics algorithms for controlling the voltage applied to each of the plurality of the EMCs (112, 112a, 132, 162) for controlling the operation of each of the plurality of the EMCs, thus restricting the surgeon's movements for causing his brain to mistaken a resistance created by the plurality of the EMCs (112, 112a, 132, 162) for an applied force; and
a plurality of electrical wires connected to and configured for providing power from the battery to the microcontroller (190), the plurality of position sensors, and the plurality of the EMCs;
wherein each of the plurality of the EMCs (112, 112a, 132, 162) is positioned on a back side of a bone joint of the shoulder, arm, hand, or finger.

2. The system of claim 1, further comprising another plurality of patches, EMCs, cables, and anchor pads, each positioned on a frontal side of the shoulders, arms, hands, and fingers.

3. The system of any of the previous claims, further comprising cable tubing (103, 109) configured for routing the plurality of cables (106)

4. The system of claim 1, wherein the plurality of the EMCs (112, 112a, 132, 162) are ElectroAdhesive Clutches (EAC).

5. A haptic-VR surgeon training system, comprising:
a VR system comprising a Software Development Kit (SDK) (250) configured for receiving tracking data from a controller (210); and
a haptic system (100) according to any of claims 1-4, comprising the controller (210) and configured for receiving at the controller (210) reaction forces data from the VR system for using them for applying adapted voltages to the plurality of the EMCs (112, 112a, 132, 162) for controlling the operation of the EMCs for restricting the surgeon's movements in such a way that his brain mistakes the resistance for an applied force
